(19) **Europäisches Patentamt / European Patent Office / Office européen des brevets**

(11) **EP 4 234 740 A1**

(12) # EUROPEAN PATENT APPLICATION
published in accordance with Art. 153(4) EPC

(43) Date of publication:
30.08.2023 Bulletin 2023/35

(21) Application number: 21900347.2

(22) Date of filing: 01.11.2021

(51) International Patent Classification (IPC):
*C22C 38/00* (2006.01)      *C22C 38/44* (2006.01)
*C22C 38/54* (2006.01)      *C21D 8/02* (2006.01)

(52) Cooperative Patent Classification (CPC):
**C22C 38/00; C22C 38/44; C22C 38/54;** C21D 8/02

(86) International application number:
**PCT/JP2021/040295**

(87) International publication number:
**WO 2022/118592 (09.06.2022 Gazette 2022/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 03.12.2020   JP 2020201340

(71) Applicant: **JFE Steel Corporation**
**Tokyo 100-0011 (JP)**

(72) Inventors:
• **SATO Yuya**
  **Tokyo 100-0011 (JP)**
• **TACHIBANA Shunichi**
  **Tokyo 100-0011 (JP)**

(74) Representative: **Grünecker Patent- und**
**Rechtsanwälte**
**PartG mbB**
**Leopoldstraße 4**
**80802 München (DE)**

(54) **STEEL PLATE**

(57)     Provided is a steel plate that has high strength and has excellent cryogenic toughness uniformly in the steel plate regardless of the thickness. A steel plate comprises a chemical composition containing, in mass%, C: 0.01 % to 0.15 %, Si: 0.01 % to 0.50 %, Mn: 0.05 % to 0.60 %, Ni: 6.0 % to 7.5 %, Cr: 0.01 % to 1.00 %, Mo: 0.05 % to 0.50 %, P: 0.03 % or less, S: 0.005 % or less, and N: 0.0010 % to 0.0080 %, with a balance consisting of Fe and inevitable impurities, wherein at a position of $1/4 \times t$, a decrease ratio of an amount of retained γ between before and after deep cooling treatment at -196 °C is less than 5 vol% and the amount of retained γ after the deep cooling treatment is 0.5 vol% or more.

EP 4 234 740 A1

**Description**

TECHNICAL FIELD

The present disclosure relates to a steel plate, and particularly to a steel plate for cryogenic use that can stably ensure excellent cryogenic toughness over a wide range of thicknesses. The steel plate according to the present disclosure can be suitably used for structural steel used in cryogenic environments, such as marine and land liquefied gas storage tanks.

BACKGROUND

When hot-rolled steel plates are used for structures such as liquefied gas storage tanks, the use environments are cryogenic, so that the steel plates are required to have not only excellent strength but also excellent toughness at cryogenic temperatures (cryogenic toughness). For example, in the case where a hot-rolled steel plate is used for a liquefied natural gas storage tank, the hot-rolled steel plate is required to have excellent toughness at cryogenic temperatures lower than or equal to -164 °C, which is the boiling point of liquefied natural gas. If the cryogenic toughness of the steel material is poor, the safety of the structure for cryogenic storage may be unable to be maintained. The demand to improve the cryogenic toughness of steel plates used is therefore high.

For marine applications where the tank volume is relatively small, steel materials with relatively small thicknesses among steel plates are required. For land applications where the tank volume is relatively large, steel materials with larger thicknesses are required. In response to such requirement, 7 % Ni or 9 % Ni steel plates are conventionally used.

7 % to 9 % Ni steel plates are proposed, for example, in JP 2011-219848 A (PTL 1) and JP 2011-214099 A (PTL 2).

PTL 1 discloses a steel plate for cryogenic use containing Ni: more than 5.0 % and less than 10.0 % and predetermined amounts of C, Si, Mn, and Al. In the steel plate in PTL 1, the average value of absorbed energy $vE_{-196}$ per unit area is 1.25 $J/mm^2$ or more over a thickness of 6 mm to 50 mm.

PTL 2 discloses a Ni-containing steel for low temperature use containing Ni: 7.0 % to 10.5 % and predetermined amounts of C, Si, Mn, and Al. In the steel in PTL 2, the average value of absorbed energy $vE_{-196}$ °C is 150 J or more over a thickness of 30 mm to 60 mm.

CITATION LIST

Patent Literature

PTL 1: JP 2011-219848 A
PTL 2: JP 2011-214099 A

SUMMARY

(Technical Problem)

Our careful examination on steel plates of 7 % Ni steel revealed the problem in that the cryogenic toughness varies in the steel plate. We then found out that this variation in cryogenic toughness is caused by variation in the stability of retained γ (retained austenite) partly due to the influence of heating conditions such as the heating rate. It is presumed that, if the stability of retained γ varies in the steel plate, unstable retained γ tends to transform into martensite at cryogenic temperatures, causing degradation in toughness. We also found out such variation in cryogenic toughness in the steel plate is more noticeable when the steel plate is thinner.

In this specification, the expression "retained γ is stable" refers to the tendency that retained austenite hardly transforms into martensite microstructure at -196 °C, and the expression "retained γ is unstable" refers to the tendency that retained austenite easily transforms into martensite microstructure at -196 °C.

Regarding cryogenic toughness, PTL 1 and PTL 2 merely consider the average value of absorbed energy, and fail to consider variation in cryogenic toughness in the steel plate.

It could therefore be helpful to provide a steel plate that has stably high cryogenic toughness without variation in the steel plate regardless of the thickness of the steel plate while maintaining high strength.

(Solution to Problem)

Upon careful examination on the chemical compositions and microstructures of 7 % Ni steel plates, we discovered the following:

(1) To suppress variation in cryogenic toughness in the steel plate, it is important that, in the case where deep cooling treatment at -196 °C is performed, the decrease ratio of the amount of retained γ between before and after the deep cooling treatment is low, retained γ is stable at cryogenic temperatures, and at least a predetermined amount of such stable retained γ is present even after the deep cooling treatment. The presence of at least the predetermined amount of stable retained γ even at cryogenic temperatures means that the influence of the heating conditions in the production process is uniform in the steel plate.
(2) To ensure high strength while achieving high cryogenic toughness to thus maintain the safety of the structure for cryogenic storage, it is important to add a predetermined amount of Mo.

We also discovered that, for example, the following (3) to (5) are effective in order to obtain stable γ microstructure even at cryogenic temperatures as described in (1) above:

(3) It is effective that, in the γ microstructure in the steel plate, the average Mn concentration is a relatively low level of less than 2 mass% and the average Ni concentration is a relatively high level of 12 mass% or more. If the Mn concentration in the γ microstructure is high, the Ni concentration in the γ microstructure tends to be low, which easily leads to the formation of unstable γ.
(4) It is effective that, in the steel material for producing the steel plate, the average Mn concentration is a relatively low level of 0.60 mass% or less. If the Mn content in the steel material is low, Mn concentrating into the γ microstructure is reduced. This contributes to lower average Mn concentration in the γ microstructure.
(5) It is effective that, in the steel plate production process, γ + α dual phase heating is performed, and the heating rate at temperatures of 500 °C or more during the dual phase heating is reduced to less than 1 °C/s. Such reduction of the heating rate in the high temperature range during the dual phase heating promotes concentration of Ni into the γ microstructure. This contributes to higher average Ni concentration in the γ microstructure.

The present disclosure is based on these discoveries. We thus provide the following.

1. A steel plate comprising a chemical composition containing (consisting of), in mass%, C: 0.01 % to 0.15 %, Si: 0.01 % to 0.50 %, Mn: 0.05 % to 0.60 %, Ni: 6.0 % to 7.5 %, Cr: 0.01 % to 1.00 %, Mo: 0.05 % to 0.50 %, P: 0.03 % or less, S: 0.005 % or less, and N: 0.0010 % to 0.0080 %, with a balance consisting of Fe and inevitable impurities, wherein at a depth position of 1/4 of a thickness of the steel plate from a surface of the steel plate in a thickness direction (hereafter, such a position is also denoted by "1/4 $\times$ t" where t is the thickness of the steel plate), a decrease ratio of an amount of retained γ between before and after deep cooling treatment at -196 °C is less than 5 % in volume fraction and the amount of retained γ after the deep cooling treatment is 0.5 % or more in volume fraction. In the present disclosure, the term "deep cooling treatment" refers to a treatment in which a test piece of the steel plate is immersed in -196 °C liquid nitrogen for 1 hour. The treatment is used to evaluate the microstructure of the steel plate according to the present disclosure at cryogenic temperatures. The decrease ratio of the amount of retained γ between before and after the deep cooling treatment and the amount of retained γ after the deep cooling treatment can be measured by the methods described in the EXAMPLES section below.
2. The steel plate according to 1., wherein the chemical composition further contains, in mass%, one or more selected from the group consisting of Al: 0.008 % to 0.10 %, Cu: 0.40 % or less, Nb: 0.05 % or less, V: 0.05 % or less, Ti: 0.03 % or less, and B: 0.0030 % or less.
3. The steel plate according to 1. or 2., wherein the chemical composition further contains, in mass%, one or more selected from the group consisting of Ca: 0.007 % or less, REM: 0.010 % or less, and Mg: 0.070 % or less.

(Advantageous Effect)

It is thus possible to provide a steel plate that has excellent cryogenic toughness uniformly in the steel plate regardless of the thickness of the steel plate while maintaining high strength. The use of the steel plate for a steel structure that is used in a cryogenic environment, such as a liquefied gas storage tank, can improve the safety of the steel structure. This yields significantly advantageous effects in industrial terms.

DETAILED DESCRIPTION

Embodiment of the present disclosure will be described in detail below. The following description shows preferred embodiments of the present disclosure, and the present disclosure is not limited to such.

[Chemical composition]

A steel plate according to the present disclosure has a predetermined chemical composition. It is preferable that the steel material used for producing the steel plate according to the present disclosure also has the predetermined chemical composition. Each element contained in the chemical composition will be described below. In this specification, "%" as a unit of content of each element denotes "mass%" unless otherwise specified.

C: 0.01 % or more and 0.15 % or less

C is an element that has the effect of improving the strength of the steel plate. To achieve this effect, the C content is 0.01 % or more, and preferably 0.03 % or more. If the C content is more than 0.15 %, the cryogenic toughness of the steel plate decreases. The C content is therefore 0.15 % or less, and preferably 0.12 % or less.

Si: 0.01 % or more and 0.50 % or less

Si is an element that contributes to improved strength of the steel plate and also acts as a deoxidizer. To achieve these effects, the Si content is 0.01 % or more. If the Si content is excessively high, the toughness decreases. The Si content is therefore 0.50 % or less, and preferably 0.30 % or less.

Mn: 0.05 % or more and 0.60 % or less

Mn is an element that enhances the hardenability of the steel and is effective in increasing the strength of the steel plate. To achieve this effect, the Mn content is 0.05 % or more. If the Mn content is more than 0.60 %, the susceptibility to temper embrittlement increases, and the toughness begins to vary. The Mn content is therefore limited to 0.60 % or less. Specifically, if the Mn content is more than 0.60 %, the Mn concentration in the y microstructure increases and unstable $\gamma$ tends to form, so that the decrease ratio of the amount of retained y between before and after deep cooling treatment cannot be limited to less than 5 vol%. That is, the presence of unstable retained y in the steel plate makes it impossible to suppress variation in toughness. The Mn content is preferably less than 0.40 %, more preferably 0.30 % or less, further preferably less than 0.20 %, and even more preferably less than 0.17 %.

Ni: 6.0 % or more and 7.5 % or less

Ni is an element very effective in improving the cryogenic toughness of the steel plate. Specifically, if the Ni content is less than 6.0 %, the Ni concentration in the y microstructure decreases and unstable $\gamma$ tends to form, so that the amount of stable retained $\gamma$ after deep cooling treatment cannot be limited to 0.5 vol% or more. That is, the presence of unstable retained y in the steel plate makes it impossible to suppress variation in toughness. Moreover, if the Ni content is less than 6.0 %, the strength of the steel plate decreases. The Ni content is therefore 6.0 % or more. Since Ni is an expensive element, the steel plate cost increases as the Ni content increases. Accordingly, in the present disclosure, the Ni content is 7.5 % or less.

Cr: 0.01 % or more and 1.00 % or less

Cr is an element that can improve the strength of the steel plate without significantly impairing the cryogenic toughness. To achieve this effect, the Cr content is 0.01 % or more, and more preferably 0.30 % or more. If the Cr content is more than 1.00 %, the cryogenic toughness of the steel plate decreases. The Cr content is therefore 1.00 % or less.

Mo: 0.05 % or more and 0.50 % or less

Mo is an element that can improve the strength of the steel plate without significantly impairing the cryogenic toughness, as with Cr. If the Mo content is less than 0.05 %, it is difficult to ensure the desired strength and toughness, and especially the strength cannot be obtained. Particularly in the present disclosure, even in the case where the strength tends to decrease as a result of the Mn content being reduced to suppress variation in cryogenic toughness, the desired strength can be ensured by containing a predetermined amount of Mo. The Mo content is therefore 0.05 % or more, and preferably more than 0.10 %. If the Mo content is more than 0.50 %, the cryogenic toughness decreases. The Mo content is therefore 0.50 % or less, preferably 0.30 % or less, and more preferably 0.25 % or less.

P: 0.03 % or less

P is an inevitable impurity, and is a harmful element that adversely affects the cryogenic toughness of the steel plate. For example, to obtain a sound base metal and weld joint when welding the steel plate and yielding a welded structure, it is preferable to reduce the P content as much as possible. The P content is therefore 0.03 % or less. Since lower P content is better from the viewpoint of the cryogenic toughness, no lower limit is placed on the P content, and the P content may be 0 %. Even in such a case, containing P as an inevitable impurity is allowed. Excessively reducing the P content causes an increase in cost. Accordingly, the lower limit of the P content is preferably 0.001 % from the viewpoint of cost.

S: 0.005 % or less

S forms MnS in the steel and significantly degrades the cryogenic toughness, and accordingly it is desirable to reduce the S content as much as possible with the upper limit being 0.005 %. The S content is preferably 0.002 % or less. Since lower S content is better, no lower limit is placed on the S content, and the S content may be 0 %. Even in such a case, containing S as an inevitable impurity is allowed.

N: 0.0010 % or more and 0.0080 % or less

N forms precipitates in the steel. If the N content is more than 0.0080 %, the toughness of the base metal decreases. N is also an element that forms AlN and thus contributes to grain refinement of the base metal. This effect is achieved when the N content is 0.0010 % or more. The N content is therefore 0.0010 % or more and 0.0080 % or less. The N content is preferably 0.0020 % or more. The N content is preferably 0.0060 % or less.

In one embodiment of the present disclosure, the chemical composition may contain the foregoing predetermined amounts of elements with the balance consisting of Fe and inevitable impurities.

In another embodiment of the present disclosure, the chemical composition may optionally further contain one or more selected from the group consisting of Al, Cu, Nb, V, Ti, and B preferably in the following amounts.

Al: 0.008 % or more and 0.10 % or less

Al is an element contained in deoxidizers. If the Al content is less than 0.008 %, its effect as a deoxidizer is poor. Al is also an element that forms AlN and thus contributes to grain refinement of the base metal. Accordingly, in the case of adding Al, the Al content is preferably 0.008 % or more, and more preferably 0.02 % or more. If the Al content is more than 0.10 %, the cleanliness of the steel is impaired. The Al content is therefore preferably 0.10 % or less, and more preferably 0.05 % or less.

Cu: 0.40 % or less

Cu is an element that has the effect of increasing the strength of the steel plate by hardenability improvement. If the Cu content is more than 0.40 %, not only the cryogenic toughness of the steel plate decreases, but also the surface characteristics of the steel material (slab) after casting degrade. Accordingly, in the case of adding Cu, the Cu content is preferably 0.40 % or less, and more preferably 0.30 % or less. Although no lower limit is placed on the Cu content, the Cu content is preferably 0.10 % or more in order to achieve the foregoing effect.

Nb: 0.05 % or less

Nb is an effective element that increases the strength of the steel plate by strengthening by precipitation. If the Nb content is excessively high, the cryogenic toughness of the steel plate decreases. Accordingly, in the case of adding Nb, the Nb content is preferably 0.05 % or less, and more preferably 0.03 % or less. Although no lower limit is placed on the Nb content, the Nb content is preferably 0.010 % or more in order to achieve the foregoing effect.

V: 0.05 % or less

V is an effective element that increases the strength of the steel plate by strengthening by precipitation, as with Nb. If the V content is excessively high, the cryogenic toughness of the steel plate decreases. Accordingly, in the case of adding V, the V content is preferably 0.05 % or less, and more preferably 0.04 % or less. Although no lower limit is placed on the V content, the V content is preferably 0.010 % or more in order to achieve the foregoing effect.

Ti: 0.03 % or less

Ti is an element that has the effect of increasing the toughness of the weld without degrading the mechanical properties of the base metal when welding the steel plate to yield a welded structure. Hence, Ti may be optionally added in the range of 0.03 % or less.

B: 0.0030 % or less

B is an element that enhances the hardenability when added in a small amount. To sufficiently achieve this effect, the B content may be 0.0003 % or more. If the B content is more than 0.0030 %, the toughness degrades. Accordingly, in the case of adding B, the B content is preferably 0.0030 % or less.
In another embodiment of the present disclosure, the chemical composition may optionally further contain one or more selected from the group consisting of Ca, REM, and Mg preferably in the following amounts.

Ca: 0.007 % or less

Ca is an element that has the effect of improving the cryogenic toughness of the steel plate by controlling the form of inclusions in the steel. If the Ca content is excessively high, the cleanliness of the steel is impaired. Accordingly, in the case of adding Ca, the Ca content is preferably 0.007 % or less, and more preferably 0.004 % or less. Although no lower limit is placed on the Ca content, the Ca content is preferably 0.001 % or more in order to achieve the foregoing effect.

REM: 0.010 % or less

REM (rare earth metal) is an element that has the effect of improving the cryogenic toughness of the steel plate by controlling the form of inclusions in the steel, as with Ca. If the REM content is excessively high, the cleanliness of the steel is impaired. Accordingly, in the case of adding REM, the REM content is preferably 0.010 % or less, and more preferably 0.008 % or less. Although no lower limit is placed on the REM content, the REM content is preferably 0.001 % or more in order to achieve the foregoing effect.
Herein, REM is a generic term for 17 elements including 15 lanthanoid elements and Y and Sc, and these elements can be contained singly or in combination. The REM content is the total content of these elements.

Mg: 0.070 % or less

Mg is an element that has the effect of improving the cryogenic toughness of the steel plate by controlling the form of inclusions in the steel, as with Ca and REM. If the Mg content is excessively high, the cleanliness of the steel is impaired. Accordingly, in the case of adding Mg, the Mg content is preferably 0.070 % or less, and more preferably 0.004 % or less. Although no lower limit is placed on the Mg content, the Mg content is preferably 0.001 % or more in order to achieve the foregoing effect.

[Microstructure]

The steel plate according to the present disclosure has a feature that, at $1/4 \times t$, the decrease ratio of the amount of retained $\gamma$ between before and after deep cooling treatment is less than 5 vol% and the amount of retained $\gamma$ after the deep cooling treatment is 0.5 vol% or more. As a result of a predetermined amount of stable retained $\gamma$ being present in the steel plate, stable and high cryogenic toughness without variation in the steel plate can be achieved regardless of the thickness.
To achieve the foregoing predetermined retained $\gamma$ properties, in the microstructure of the steel plate before the deep cooling treatment, the average Mn concentration in $\gamma$ is desirably less than 2 mass%, and the average Ni concentration in $\gamma$ is desirably 12 mass% or more. If the Mn concentration in $\gamma$ in the steel plate is low, i.e. in the foregoing range, unstable $\gamma$ with a low Ni concentration is unlikely to form, so that retained $\gamma$ at cryogenic temperatures can be easily stabilized. If the Ni concentration in $\gamma$ in the steel plate is in the foregoing range, retained $\gamma$ at cryogenic temperatures can be easily stabilized.
In the microstructure of the steel plate, the total area ratio of bainite and martensite is preferably 85 % or more.

With microstructure mainly composed of bainite and martensite, sufficient strength can be easily obtained while ensuring excellent cryogenic toughness. The ratio of bainite and martensite may be any ratio.

Herein, the "microstructure mainly composed of martensite and bainite" refers to such microstructure in which the total area ratio of martensite and bainite is more than 50 %.

(Decrease ratio of amount of retained y at 1/4 × t between before and after deep cooling treatment: less than 5 %)

The stability of retained y (austenite) in the steel plate tends to vary in the steel plate. Unstable retained y transforms into martensite at cryogenic temperatures, causing a decrease in toughness. Thus, variation in the stability of retained y causes variation in cryogenic toughness in the steel plate. As an index for determining the stability of retained $\gamma$, we looked at the decrease ratio of the amount of retained y expressed by the following formula (1):

$$\text{Decrease ratio of amount of retained } \gamma \text{ (vol\%)} = \{(\text{amount of retained}$$
$$\gamma \text{ at } 1/4 \times \text{t in steel plate before deep cooling treatment - amount of retained } \gamma$$
$$\text{at } 1/4 \times \text{t in steel plate after deep cooling treatment)/amount of retained } \gamma \text{ at}$$
$$1/4 \times \text{t in steel plate before deep cooling treatment}\} \times 100 \qquad \dots (1).$$

If the decrease ratio of the amount of retained y between before and after the deep cooling treatment is as low as less than 5 %, retained $\gamma$ is stable even in a cryogenic environment of -196 °C. That is, when the decrease ratio of the amount of retained y is lower, the stability of retained y in the steel plate is higher, and better cryogenic toughness is exhibited throughout the steel plate. While variation in cryogenic toughness is more noticeable when the steel plate is thinner, by satisfying the predetermined composition and microstructure according to the present disclosure, excellent cryogenic toughness can be achieved uniformly in the steel plate regardless of the thickness. The decrease ratio of the amount of retained $\gamma$ needs to be less than 5 vol%. The decrease ratio of the amount of retained $\gamma$ is preferably 1 vol% or less. Most preferably, the decrease ratio of the amount of retained y is 0 vol%, that is, the amount of retained $\gamma$ does not decrease at all as a result of the deep cooling treatment.

(Amount of retained y at 1/4 × t after deep cooling treatment: 0.5 vol% or more)

Retained y that satisfies the foregoing decrease ratio is austenite that is stable at cryogenic temperatures. Stable austenite, even in a very small amount, enables ensuring high cryogenic toughness stably. From this viewpoint, it suffices that the amount of retained y after the deep cooling treatment is 0.5 vol% or more, as long as the foregoing decrease ratio is satisfied. The amount of retained y after the deep cooling treatment may be 5.0 vol% or less, may be 4.0 vol% or less, may be less than 3.0 vol%, and may be 2.0 vol% or less.

The thickness of the steel plate is not limited, and may be any thickness. The thickness is preferably 6 mm or more. The thickness is preferably 50 mm or less. In particular, the thickness may be less than 30 mm from the viewpoint of favorably suppressing variation in cryogenic toughness and benefitting more from the effects according to the present disclosure in thin steel plates which are conventionally more susceptible to variation in cryogenic toughness in the steel plate.

[Mechanical properties]

(Tensile strength)

No lower limit is placed on the tensile strength of the steel plate, and the lower limit may be any value. The lower limit is preferably 700 MPa, and more preferably 720 MPa. No upper limit is placed on the tensile strength, and the upper limit may be any value. The upper limit is preferably 930 MPa, and more preferably 900 MPa.

The tensile strength can be measured by the method described in the EXAMPLES section below.

(Cryogenic toughness)

Regarding the toughness of the steel plate, in a full-size Charpy impact test, the Charpy absorbed energy at -196 °C (vE$_{-196°C}$) is preferably 200 J or more, more preferably 220 J or more, further preferably 230 J or more, even more preferably 240 J or more, and particularly preferably 250 J or more, and may be 350 J or less, and may be 280 J or less. In a half-size Charpy impact test, the Charpy absorbed energy at -196 °C (vE$_{-196°C}$) is preferably 100 J or more and more preferably 120 J or more, and may be less than 200 J, and may be 150 J or less.

To achieve high cryogenic toughness stably without variation in the steel plate, for example, it is preferable that the foregoing high Charpy absorbed energy is achieved in all of three test pieces collected from any parts of the steel plate. In other words, if at least one of the three test pieces does not have the foregoing high Charpy absorbed energy, it can be presumed that the cryogenic toughness is low, the cryogenic toughness varies, or the cryogenic toughness is low and also varies. For example, the three test pieces are collected from a total of three locations, namely, both ends of the steel plate in the longitudinal direction (usually about 1000 mm inward from each end) and the center of the steel plate in the longitudinal direction. Such test pieces can be used to determine whether the steel plate has uniform cryogenic toughness stably in the longitudinal direction.

The Charpy absorbed energy can be measured by the method described in the EXAMPLES section below.

[Production method]

An example of a production method by which the steel plate according to the present disclosure can be suitably produced will be described below. In the following description, the "temperature" refers to the temperature at the center of the thickness unless otherwise specified. The temperature at the center of the thickness can be obtained, for example, by heat transfer calculation from the surface temperature of the steel plate measured with a radiation thermometer.

As a specific example of the production method, the steel plate according to the present disclosure can be suitably produced by sequentially performing the following steps (1) to (7):

(1) heating of steel material
(2) hot rolling
(3) first accelerated cooling
(4) dual phase heating
(5) second accelerated cooling
(6) tempering
(7) air cooling.

(1) Heating of steel material

First, it is preferable to heat a steel material having the above-described chemical composition to a temperature of 900 °C or more and 1200 °C or less. The method of producing the steel material is not limited. For example, molten steel having the above-described chemical composition is prepared by steelmaking by a conventional method and cast to produce the steel material. Steelmaking may be performed by any method such as a converter, an electric furnace, or an induction furnace. Casting is preferably performed by continuous casting from the viewpoint of productivity, but may be performed by ingot casting and blooming. An example of the steel material is a steel slab.

The steel material obtained as a result of casting and the like may be heated after cooling, or directly heated without cooling.

If the heating temperature of the steel material is less than 900 °C, due to high deformation resistance of the steel material, the load on the mill in the subsequent hot rolling increases, making hot rolling difficult. Therefore, the heating temperature of the steel material is preferably 900 °C or more. If the heating temperature of the steel material is more than 1200 °C, the oxidation of the steel is noticeable, and the loss due to the removal of the oxide film caused by oxidation increases, resulting in a decrease in yield rate. Therefore, the heating temperature of the steel material is preferably 1200 °C or less.

(2) Hot rolling

After the heating, the heated steel material can be hot-rolled to obtain a hot-rolled steel plate. The final thickness of the hot-rolled steel plate is not limited, but is preferably 6 mm or more and is preferably 50 mm or less as mentioned above.

(3) First accelerated cooling

The hot-rolled steel plate after the hot rolling can be subjected to accelerated cooling (first accelerated cooling). In the first accelerated cooling, the average cooling rate in the temperature range of 550 °C or less and 300 °C or more in terms of temperature at a thickness position of $1/4 \times t$ of the steel plate is preferably 1 °C/s or more, and the cooling stop temperature in terms of temperature at $1/4 \times t$ is preferably 300 °C or less. By performing the first accelerated cooling under such conditions, the hot-rolled steel plate is favorably quenched, and the desired microstructure mainly composed of martensite and bainite can be easily obtained.

If the average cooling rate in the temperature range of 550 °C or less and 300 °C or more in terms of temperature at $1/4 \times t$ in the first accelerated cooling is less than 1 °C/s, it is difficult to obtain the desired transformed microstructure, so that sufficient strength cannot be obtained. Moreover, unstable $\gamma$ tends to remain in the steel, making it difficult to reduce the decrease ratio of the amount of retained γ between before and after the deep cooling treatment. As a result, the cryogenic toughness is likely to decrease. Although no upper limit is placed on the average cooling rate, if the average cooling rate is more than 200 °C/s, it is difficult to control the temperature at each position in the steel plate, and the material quality tends to vary in the plate transverse direction and the rolling direction. This is likely to cause variation in material properties such as tensile property and toughness. Therefore, the average cooling rate is preferably 200 °C/s or less.

If the cooling stop temperature in terms of temperature at $1/4 \times t$ in the first accelerated cooling is more than 300 °C, unstable retained $\gamma$ tends to form, making it difficult to reduce the decrease ratio of the amount of retained y between before and after the deep cooling treatment. This is likely to cause a decrease and variation in cryogenic toughness.

The first accelerated cooling may be performed by any method without limitation. For example, one or both of air cooling and water cooling may be used. For water cooling, any cooling method using water (for example, spray cooling, mist cooling, laminar cooling, etc.) is available.

(4) Dual phase heating

The hot-rolled steel plate cooled after the hot rolling can then be subjected to dual phase heating. Specifically, it is preferable to heat the cooled hot-rolled steel plate to the temperature range of $A_{c1}$ temperature or more and less than $A_{c3}$ temperature, with the average heating rate being less than 1 °C/s at 500 °C or more in terms of temperature at a thickness position of $1/4 \times t$. It is preferable to, by the dual phase heating, cause part of the microstructure of the hot-rolled steel plate to undergo reverse transformation from bainite and/or martensite and form an austenite mixed microstructure having alloy-concentrated phase in which C, Ni, and Mn are concentrated. In the austenite mixed microstructure, the concentration of Mn is preferably reduced to less than 2 mass%, and the concentration of Ni is preferably increased to 12 mass% or more.

Herein, the "average heating rate" refers to the average rate from 500 °C to the dual phase heating temperature.

If the heating rate in the foregoing high temperature range in the dual phase heating is 1 °C/s or more, the formation of the alloy-concentrated phase is likely to be insufficient. In particular, the Ni concentration in the y microstructure in the steel plate cannot be sufficiently increased. Consequently, the stability of y decreases, and the decrease ratio of retained y between before and after the deep cooling treatment increases, making it difficult to ensure excellent cryogenic toughness. Moreover, the toughness tends to vary.

If the heating temperature in the dual phase heating is less than $A_{c1}$ temperature, the reverse-transformed austenite is hardly obtained, and it is difficult to obtain the desired microstructure in the subsequent accelerated cooling. Consequently, it is difficult to obtain the desired cryogenic toughness in the finally obtained steel plate. If the heating temperature in the dual phase heating is $A_{c3}$ temperature or more, the reverse transformation rate of bainite and martensite tends to be excessively high, which hinders the formation of the alloy-concentrated phase. This makes it difficult to ensure the amount of retained y after the deep cooling treatment, so that it is difficult to ensure excellent cryogenic toughness. Moreover, the toughness tends to vary.

$A_{c1}$ temperature ($A_{c1}$ transformation temperature) and $A_{c3}$ temperature ($A_{c3}$ transformation temperature) can be calculated respectively using the following formula (2) and formula (3):

$$A_{c1} \text{ temperature } (°C) = 750.8 - 26.6 \times C + 17.6 \times Si - 11.6 \times Mn - 22.9 \times Cu - 23 \times Ni + 24.1 \times Cr + 22.5 \times Mo - 39.7 \times V - 5.7 \times Ti + 232.4 \times Nb - 169.4 \times Al \qquad \ldots (2)$$

$$A_{c3} \text{ temperature } (°C) = 937.2 - 436.5 \times C + 56 \times Si - 19.7 \times Mn - 16.3 \times Cu - 26.6 \times Ni - 4.9 \times Cr + 38.1 \times Mo + 124.8 \times V + 136.3 \times Ti - 19.1 \times Nb + 198.4 \times Al \qquad \ldots (3).$$

Each element symbol in formulas (2) and (3) represents the content (mass%) of the element, which is 0 in the case where the element is not contained.

For the dual phase heating, any heating method may be used as long as the heating temperature can be controlled in the foregoing manner. An example of the heating method is furnace heating. The furnace heating is not limited, and a typical heat treatment furnace may be used.

After the dual phase heating temperature is reached, the next accelerated cooling may be started immediately, or the next accelerated cooling may be started after holding at the dual phase heating temperature for any time. In the case of holding at the dual phase heating temperature, the holding time is not limited, but is preferably 5 minutes or more.

(5) Second accelerated cooling

The hot-rolled steel plate after the dual phase heating can then be subjected to accelerated cooling (second accelerated cooling). In the second accelerated cooling, the average cooling rate at a thickness position of $1/4 \times t$ of the steel plate is preferably 1 °C/s or more, and the cooling stop temperature in terms of temperature at $1/4 \times t$ is preferably 300 °C or less.

If the average cooling rate in terms of temperature at $1/4 \times t$ in the second accelerated cooling is less than 1 °C/s, unstable γ tends to remain in the steel, making it difficult to reduce the decrease ratio of the amount of retained γ between before and after the deep cooling treatment. As a result, the cryogenic toughness of the finally obtained steel plate decreases, and the toughness tends to vary in the steel plate. Although no upper limit is placed on the average cooling rate, if the average cooling rate is more than 200 °C/s, it is difficult to control the temperature at each position in the steel plate, and the material quality tends to vary in the plate transverse direction and the rolling direction. This is likely to cause variation in material properties such as tensile property and toughness. Therefore, the average cooling rate is preferably 200 °C/s or less.

Herein, the "average cooling rate" refers to the average rate at which the temperature decreases per unit time from the accelerated cooling start to the accelerated cooling stop in the second accelerated cooling step.

If the cooling stop temperature in terms of temperature at $1/4 \times t$ in the second accelerated cooling is more than 300 °C, unstable austenite tends to remain, making it difficult to reduce the decrease ratio of the amount of retained γ between before and after the deep cooling treatment. As a result, the cryogenic toughness is likely to decrease.

The second accelerated cooling may be performed by any method without limitation. For example, one or both of air cooling and water cooling may be used. For water cooling, any cooling method using water (for example, spray cooling, mist cooling, laminar cooling, etc.) is available.

(6) Tempering

The hot-rolled steel plate cooled after the dual phase heating can then be subjected to tempering. The tempering temperature is preferably 500 °C or more. The tempering temperature is preferably 650 °C or less. The tempering temperature is more preferably in the range of 500 °C to 650 °C. If the tempering temperature is less than 500 °C, tempering is insufficient and the toughness tends to decrease. If the tempering temperature is more than 650 °C, the strength decreases and unstable γ remains, making it difficult to reduce the decrease ratio of the amount of retained γ between before and after the deep cooling treatment. As a result, the toughness is likely to decrease.

For heating in the tempering step, any heating method may be used as long as the heating temperature can be controlled in the foregoing manner. An example of the heating method is furnace heating. The furnace heating is not limited, and a typical heat treatment furnace may be used.

After the tempering temperature is reached, any cooling may be started after holding at the tempering temperature for any time. In the case of holding at the tempering temperature, the holding time is not limited, but is preferably 5 minutes or more.

(7) Air cooling

The steel plate after the tempering can be subjected to any cooling, as mentioned above. The cooling method is not limited, but air cooling is preferable from the viewpoint of workability and cost during production.

Thus, the steel plate according to the present disclosure can be suitably obtained, for example, by a production method for a steel plate comprising: heating a steel material having the above-described chemical composition to a temperature of 900 °C or more and 1200 °C or less; rolling the heated steel material to obtain a hot-rolled steel plate of 6 mm or more and 50 mm or less in final thickness; subjecting the hot-rolled steel plate to first accelerated cooling in which the average cooling rate in the temperature range of 550 °C or less and 300 °C or more is 1 °C/s or more and the cooling stop temperature is 300 °C or less, in terms of temperature at a thickness position of $1/4 \times t$ of the steel plate; subjecting the hot-rolled steel plate after the first accelerated cooling to dual phase heating of heating to the temperature range of $A_{c1}$ temperature or more and less than $A_{c3}$ temperature with the average heating rate at 500 °C or more in terms of temperature at a thickness position of $1/4 \times t$ of the steel plate being less than 1 °C/s; subjecting the hot-rolled steel plate after the dual phase heating to second accelerated cooling in which the average cooling rate is 1 °C/s or more and the cooling stop temperature is 300 °C or less at a thickness position of 1/4 × t of the steel plate; subjecting the hot-rolled steel plate after the second accelerated cooling to tempering of heating to the temperature range of 500 °C or more and 650 °C or less; and subjecting the hot-rolled steel plate after the tempering to air cooling.

EXAMPLES

Steel plates were each produced according to the following procedure, and their properties were evaluated.

First, molten steel having the chemical composition shown in Table 1 was prepared by steelmaking using a converter, and subjected to continuous casting to produce a steel slab (thickness: 200 mm) as a steel material. $A_{c1}$ temperature (°C) calculated using the foregoing formula (2) and $A_{c3}$ temperature (°C) calculated using the foregoing formula (3) are also shown in Table 1.

[Table 1]

Table 1

| Steel sample ID | Chemical composition (mass%) | | | | | | | | | | | | | | | | | | Ac$_1$ transformation temperature (°C) | Ac$_3$ transformation temperature (°C) |
|---|---|---|---|---|---|---|---|---|---|---|---|---|---|---|---|---|---|---|---|---|
| | C | Si | Mn | P | S | Al | Ni | N | Ti | Cr | B | Cu | Mo | V | Nb | Mg | Ca | REM | | |
| A | 0.05 | 0.05 | 0.15 | 0.005 | 0.0010 | 0.027 | 7.4 | 0.0035 | 0 | 0.50 | 0 | 0 | 0.15 | 0 | 0 | 0 | 0 | 0 | 589 | 727 |
| B | 0.02 | 0.10 | 0.10 | 0.007 | 0.0006 | 0.024 | 6.5 | 0.0028 | 0 | 0.35 | 0 | 0 | 0.40 | 0 | 0 | 0 | 0 | 0 | 615 | 777 |
| C | 0.06 | 0.08 | 0.55 | 0.002 | 0.0004 | 0.010 | 6.2 | 0.0022 | 0 | 0.35 | 0 | 0 | 0.06 | 0 | 0 | 0 | 0 | 0 | 610 | 742 |
| D | 0.08 | 0.05 | 0.18 | 0.003 | 0.0006 | 0.035 | 6.5 | 0.0065 | 0 | 0.45 | 0 | 0 | 0.31 | 0 | 0 | 0 | 0 | 0 | 610 | 745 |
| E | 0.03 | 0.44 | 0.35 | 0.002 | 0.0004 | 0.010 | 7.3 | 0.0024 | 0 | 0.30 | 0 | 0 | 0.25 | 0 | 0 | 0 | 0 | 0 | 597 | 758 |
| F | 0.14 | 0.10 | 0.08 | 0.002 | 0.0004 | 0.024 | 7.2 | 0.0029 | 0 | 0.20 | 0 | 0 | 0.05 | 0 | 0 | 0 | 0 | 0 | 584 | 694 |
| G | 0.06 | 0.08 | 0.32 | 0.002 | 0.0010 | 0.021 | 6.9 | 0.0026 | 0 | 0.05 | 0 | 0 | 0.11 | 0 | 0 | 0 | 0 | 0 | 588 | 734 |
| H | 0.05 | 0.06 | 0.19 | 0.025 | 0.0001 | 0.022 | 7.1 | 0.0029 | 0.01 | 0.10 | 0 | 0 | 0.05 | 0 | 0 | 0.001 | 0 | 0 | 585 | 733 |
| I | 0.04 | 0.04 | 0.15 | 0.005 | 0.0030 | 0.018 | 7.5 | 0.0031 | 0 | 0.80 | 0 | 0 | 0.09 | 0 | 0 | 0 | 0.001 | 0 | 594 | 723 |
| J | 0.02 | 0.03 | 0.14 | 0.002 | 0.0003 | 0.021 | 7.3 | 0.0065 | 0 | 0.30 | 0 | 0 | 0.21 | 0 | 0 | 0 | 0 | 0.001 | 590 | 744 |
| K | 0.04 | 0.05 | 0.26 | 0.003 | 0.0006 | 0.020 | 7.1 | 0.0031 | 0 | 0.25 | 0.0010 | 0 | 0.31 | 0 | 0 | 0 | 0 | 0 | 594 | 743 |
| L | 0.04 | 0.07 | 0.31 | 0.005 | 0.0005 | 0.032 | 6.8 | 0.0021 | 0 | 0.15 | 0 | 0.20 | 0.17 | 0 | 0 | 0 | 0 | 0 | 588 | 746 |
| M | 0.02 | 0.11 | 0.11 | 0.006 | 0.0009 | 0.021 | 6.7 | 0.0024 | 0 | 0.24 | 0 | 0 | 0.09 | 0.04 | 0 | 0 | 0 | 0 | 599 | 766 |
| N | 0.05 | 0.07 | 0.13 | 0.003 | 0.0006 | 0.033 | 7.1 | 0.0055 | 0 | 0.60 | 0 | 0 | 0.11 | 0 | 0.01 | 0 | 0 | 0 | 600 | 735 |
| O | 0.25 | 0.11 | 0.20 | 0.007 | 0.0007 | 0.010 | 6.5 | 0.0024 | 0 | 0.40 | 0 | 0 | 0.10 | 0 | 0 | 0 | 0 | 0 | 604 | 661 |
| P | 0.05 | 0.60 | 0.55 | 0.003 | 0.0012 | 0.022 | 6.3 | 0.0026 | 0 | 0.33 | 0 | 0 | 0.15 | 0 | 0 | 0 | 0 | 0 | 616 | 779 |
| Q | 0.05 | 0.11 | 1.00 | 0.003 | 0.0012 | 0.022 | 6.3 | 0.0026 | 0 | 0.40 | 0 | 0 | 0.21 | 0 | 0 | 0 | 0 | 0 | 606 | 745 |
| R | 0.05 | 0.12 | 0.20 | 0.050 | 0.0010 | 0.025 | 6.1 | 0.0044 | 0 | 0.13 | 0 | 0 | 0.21 | 0 | 0 | 0 | 0 | 0 | 613 | 768 |
| S | 0.07 | 0.30 | 0.20 | 0.007 | 0.0100 | 0.025 | 7.2 | 0.0026 | 0 | 0.42 | 0 | 0 | 0.16 | 0 | 0 | 0 | 0 | 0 | 596 | 737 |
| T | 0.04 | 0.05 | 0.26 | 0.009 | 0.0012 | 0.036 | 3.5 | 0.0035 | 0 | 0.60 | 0 | 0 | 0.22 | 0 | 0 | 0 | 0 | 0 | 680 | 837 |
| U | 0.04 | 0.15 | 0.14 | 0.006 | 0.0012 | 0.031 | 7.2 | 0.0026 | 0 | 1.50 | 0 | 0 | 0.09 | 0 | 0 | 0 | 0 | 0 | 618 | 736 |
| V | 0.05 | 0.08 | 0.16 | 0.009 | 0.0007 | 0.034 | 7.0 | 0.0151 | 0 | 0.24 | 0 | 0 | 0.25 | 0 | 0 | 0 | 0 | 0 | 594 | 746 |
| W | 0.05 | 0.05 | 0.40 | 0.005 | 0.0010 | 0.027 | 6.9 | 0.0035 | 0 | 0.50 | 0 | 0 | 0 | 0 | 0 | 0 | 0 | 0 | 594 | 730 |

(continued)

| Steel sample ID | Chemical composition (mass%) | | | | | | | | | | | | | | | | | | Ac$_1$ transformation temperature (°C) | Ac$_3$ transformation temperature (°C) |
|---|---|---|---|---|---|---|---|---|---|---|---|---|---|---|---|---|---|---|---|---|
| | C | Si | Mn | P | S | Al | Ni | N | Ti | Cr | B | Cu | Mo | V | Nb | Mg | Ca | REM | | |
| X | 0.09 | 0.08 | 0.70 | 0.003 | 0.0012 | 0.022 | 6.7 | 0.0028 | 0 | 0.45 | 0 | 0 | 0.19 | 0 | 0 | 0 | 0 | 0 | 599 | 720 |
| Y | 0.05 | 0.08 | 0.16 | 0.009 | 0.0007 | 0.034 | 7.0 | 0.0026 | 0 | 0.24 | 0 | 0 | 0.61 | 0 | 0 | 0 | 0 | 0 | 602 | 759 |
| Z | 0.12 | 0.20 | 0.36 | 0.007 | 0.0006 | 0.024 | 5.0 | 0.0028 | 0 | 0.20 | 0 | 0 | 0.10 | 0 | 0 | 0 | 0 | 0 | 635 | 764 |
| Underlines indicate outside the range according to the present disclosure. | | | | | | | | | | | | | | | | | | | | |

Next, each obtained steel material (slab) was heated and hot-rolled under the conditions shown in Table 2 to obtain a hot-rolled steel plate having the corresponding thickness (final thickness).

The obtained hot-rolled steel plate was then subjected to heat treatment including first accelerated cooling, dual phase heating, and second accelerated cooling under the conditions shown in Table 2.

The hot-rolled steel plate after the heat treatment was then subjected to tempering under the conditions shown in Table 2. In all examples, air cooling was performed after the tempering to obtain a steel plate having any of various thicknesses in the range of 6 mm to 50 mm.

A heat treatment furnace was used for heating in each step described above.

Following this, for each obtained steel plate, the microstructure, the average Mn and Ni concentrations in $\gamma$, the amount of retained $\gamma$ after deep cooling treatment, the decrease ratio of the amount of retained y between before and after deep cooling treatment, the tensile strength (TS), and the Charpy absorbed energy at -196 °C ($vE_{-196°C}$) were each evaluated in the following manner.

[Microstructure]

A test piece for microstructure observation was collected from each steel plate so that a thickness position of $1/4 \times t$ would be the observation position. The test piece was embedded in resin so that a cross section perpendicular to the rolling direction would be the observation plane, and mirror-polished. After this, nital etching was performed, and then observation was made using a scanning electron microscope with 2000 or 10000 magnification and an image of microstructure was taken. The obtained image was analyzed to identify the microstructure.

Of steel plates Nos. 1 to 36 shown in Table 2, each steel plate except Comparative Example No. 6 had a lath-like microstructure, which was a microstructure of tempered martensite alone or a mixed microstructure of tempered martensite and bainite.

[Average Mn and Ni concentrations in $\gamma$]

A thin-film test piece for TEM observation was collected from each steel plate so that a thickness position of $1/4 \times t$ would be the observation position, and subjected to TEM/EDX measurement. $\gamma$ microstructure was identified from the electron diffraction pattern, the EDX spectrum of the y microstructure was acquired, and the Mn and Ni concentrations were quantified. In this way, each of the Mn and Ni concentrations was measured at 20 locations, and the respective average values of the measurement results were taken to be the average Mn concentration and the average Ni concentration in y (mass%).

Of steel plates Nos. 1 to 36 shown in Table 2, in all Examples, the average Mn concentration in $\gamma$ was less than 2 mass% and the average Ni concentration in y was 12 mass% or more. In Table 2, "-" indicates that the steel plate before the deep cooling treatment did not have $\gamma$ (y content = 0) and the average concentrations could not be calculated.

[Decrease ratio of amount of retained y between before and after deep cooling treatment, and amount of retained $\gamma$ after deep cooling treatment]

First, to obtain the amount of retained y before the deep cooling treatment, five X-ray diffraction test pieces were collected from a thickness position of $1/4 \times t$ of each steel plate in parallel with the plate surface, and each test piece was ground and chemically polished so that the position of $1/4 \times t$ would be the measurement plane, and subjected to X-ray diffraction. The diffraction intensities of the (200) and (211) planes of $\alpha$-Fe and the (200), (220), and (311) planes of $\gamma$-Fe appearing in the symmetrical reflection X-ray diffraction pattern were determined, and the volume fraction of $\gamma$-Fe was calculated. The average value of the five test pieces was obtained and taken to be the amount of retained $\gamma$ (volume ratio) before the deep cooling treatment.

Next, to obtain the amount of retained y after the deep cooling treatment, each test piece was immersed in -196 °C liquid nitrogen for 1 hour. The volume fraction of $\gamma$-Fe was then calculated by the foregoing method, and the average value of the five test pieces was taken to be the amount of retained y (volume fraction) after the deep cooling treatment. The results are shown in Table 2.

In addition, the decrease ratio of the amount of retained y (volume fraction) between before and after the deep cooling treatment was calculated according to the foregoing formula (1). The results are shown in Table 2. In Table 2, "-" indicates that the steel plate before the deep cooling treatment did not have $\gamma$ ($\gamma$ content = 0) and the decrease ratio could not be calculated.

(Tensile strength)

A JIS No. 4 tensile test piece was collected from a thickness position of $1/4 \times t$ of each steel plate. Using the tensile test piece, a tensile test was conducted in accordance with JIS Z 2241 to evaluate the tensile strength (TS) of the steel plate. The results are shown in Table 2.

(Cryogenic toughness)

V-notched test pieces were collected from a thickness position of 1/4 × t of each steel plate in accordance with JIS Z 2202. Using the V-notched test pieces, a Charpy impact test was conducted in accordance with JIS Z 2242 to determine the Charpy absorbed energy at -196 °C ($vE_{-196°C}$). The Charpy absorbed energy can be regarded as an index of the cryogenic toughness of the steel plate. In the Charpy impact test, three test pieces at different positions in the rolling direction were collected from each steel plate. More specifically, the three test pieces were collected from a total of three locations, namely, 1000 mm inward from each of both ends of the steel plate in the rolling direction (longitudinal direction) and the center of the steel plate in the rolling direction (longitudinal direction). The measurement was performed once for each test piece, i.e. a total of three times. Each measurement result is shown in Table 2.

For Nos. 1, 13, 16, 19, and 22 with small thicknesses, a half-size Charpy impact test was conducted using half-size test pieces (sub-size test pieces). For other examples, a full-size Charpy impact test was conducted using full-size test pieces.

[Table 2]

Table 2

| No. | Steel sample ID | Heating of steel material | Hot rolling | First accelerated cooling | | Dual phase heating | | Second accelerated cooling | | Tempering temperature (°C) | Amount of retained γ at 1/4xt after deep cooling treatment (vol%) | Decrease ratio of retained γ at 1/4xt between before and after deep cooling treatment (vol%) | Average Mn concentration in γ (mass%) | Average Ni concentration in γ (mass%) | TS (MPa) | First time | Second time | Third time | Remarks |
|---|---|---|---|---|---|---|---|---|---|---|---|---|---|---|---|---|---|---|
| | | Heating temperature (°C) | Thickness (mm) | Average cooling rate at 550-300 °C at 1/4xt (°C/s) | Cooling stop temperature at 1/4xt (°C) | Average heating rate at 500°C or more at 1/4xt (°C/s) | Heating temperature (°C) | Average cooling rate at 1/4xt (°C/s) | Cooling stop temperature at 1/4xt (°C) | | | | | | | $vE_{-196°C}$ (J) | $vE_{-196°C}$ (J) | $vE_{-196°C}$ (J) | |
| 1 | A | 1100 | 6 | 60 | 150 | 0.3 | 670 | 60 | 100 | 580 | 1.0 | 0 | 0.5 | 14 | 780 | 130 | 130 | 125 | Example* |
| 2 | A | 1100 | 25 | 25 | 100 | 0.2 | 680 | 25 | 100 | 580 | 1.4 | 0 | 0.6 | 15 | 760 | 255 | 260 | 255 | Example |
| 3 | A | 1100 | 50 | 10 | 100 | 0.1 | 680 | 10 | 100 | 580 | 1.6 | 0 | 0.7 | 18 | 730 | 255 | 260 | 255 | Example |
| 4 | A | 1100 | 25 | 0.1 | 100 | 0.2 | 670 | 25 | 100 | 560 | 2.0 | 50 | 0.4 | 9 | 650 | 190 | 190 | 180 | Comparative Example |
| 5 | A | 1050 | 25 | 25 | 400 | 0.2 | 680 | 25 | 100 | 560 | 4.0 | 25 | 0.5 | 10 | 760 | 180 | 205 | 215 | Comparative Example |
| 6 | A | 1100 | 25 | 25 | 100 | 0.2 | 800 | 25 | 100 | 580 | 0.0 | - | - | - | 780 | 170 | 220 | 210 | Comparative Example |
| 7 | A | 1100 | 25 | 25 | 100 | 0.2 | 680 | 0.1 | 100 | 580 | 10.0 | 20 | 0.4 | 11 | 730 | 180 | 170 | 175 | Comparative Example |

(continued)

| No. | Steel sample ID | Production conditions | | | | | | | | | Evaluation results | | | | | | | | Remarks |
|---|---|---|---|---|---|---|---|---|---|---|---|---|---|---|---|---|---|---|---|
| | | Heating of steel material | Hot rolling | First accelerated cooling | | Dual phase heating | | Second accelerated cooling | | | | | | | | First time | Second time | Third time | |
| | | Heating temperature (°C) | Thickness (mm) | Average cooling rate at 550-300 °C at 1/4xt (°C/s) | Cooling stop temperature at 1/4xt (°C) | Average heating rate at 500°C or more at 1/4xt (°C/s) | Heating temperature (°C) | Average cooling rate at 1/4xt (°C/s) | Cooling stop temperature at 1/4xt (°C) | Tempering temperature (°C) | Amount of retained γ at 1/4xt after deep cooling treatment (vol%) | Decrease ratio of retained γ at 1/4xt between before and after deep cooling treatment (vol%) | Average Mn concentration in γ (mass%) | Average Ni concentration in γ (mass%) | TS (MPa) | vE$_{-196°C}$ (J) | vE$_{-196°C}$ (J) | vE$_{-196°C}$ (J) | |
| 8 | A | 1100 | 25 | 25 | 100 | 0.2 | 680 | 25 | 400 | 580 | 6.0 | 17 | 06 | 11 | 725 | 175 | 170 | 170 | Comparative Example |
| 9 | A | 1100 | 25 | 25 | 250 | 0.2 | 680 | 25 | 100 | 400 | 0.0 | - | - | - | 820 | 102 | 105 | 95 | Comparative Example |
| 10 | A | 1100 | 25 | 25 | 100 | 0.2 | 680 | 25 | 100 | 700 | 10.0 | 40 | 0.6 | 9 | 650 | 100 | 110 | 100 | Comparative Example |
| 11 | B | 1050 | 40 | 15 | 100 | 0.1 | 670 | 15 | 100 | 570 | 2.1 | 0 | 0.4 | 15 | 750 | 255 | 250 | 255 | Example |
| 12 | C | 1100 | 25 | 25 | 100 | 0.2 | 680 | 25 | 100 | 580 | 2.4 | 0 | 1.5 | 15 | 740 | 215 | 205 | 210 | Example |
| 13 | D | 1100 | 6 | 60 | 100 | 0.2 | 690 | 25 | 280 | 590 | 2.5 | 0 | 0.4 | 16 | 780 | 121 | 122 | 123 | Example* |
| 14 | E | 1150 | 50 | 10 | 100 | 0.05 | 670 | 10 | 100 | 540 | 4.5 | 0 | 1.2 | 18 | 770 | 225 | 228 | 220 | Example |
| 15 | F | 1110 | 25 | 25 | 100 | 0.2 | 630 | 25 | 100 | 570 | 1.5 | 0 | 0.4 | 16 | 750 | 250 | 250 | 250 | Example |
| 16 | G | 1100 | 6 | 60 | 100 | 0.1 | 680 | 60 | 100 | 560 | 1.8 | 0 | 1 | 15 | 800 | 112 | 114 | 110 | Example* |

EP 4 234 740 A1

| No. | Steel sample ID | Production conditions | | | | | | | | | | Evaluation results | | | | | | | | | Remarks |
| | | Heating of steel material | Hot rolling | First accelerated cooling | | Dual phase heating | | Second accelerated cooling | | Tempering temperature (°C) | Amount of retained γ at 1/4xt after deep cooling treatment (vol%) | Decrease ratio of retained γ at 1/4xt between before and after deep cooling treatment (vol%) | Average Mn concentration in γ (mass%) | Average Ni concentration in γ (mass%) | TS (MPa) | First time | Second time | Third time | | |
| | | Heating temperature (°C) | Thickness (mm) | Average cooling rate at 550-300 °C at 1/4xt (°C/s) | Cooling stop temperature at 1/4xt (°C) | Average heating rate at 500°C or more at 1/4xt (°C/s) | Heating temperature (°C) | Average cooling rate at 1/4xt (°C/s) | Cooling stop temperature at 1/4xt (°C) | | | | | | | $vE_{-196°C}$ (J) | $vE_{-196°C}$ (J) | $vE_{-196°C}$ (J) | | |
| 17 | H | 1100 | 25 | 25 | 100 | 0.2 | 690 | 25 | 100 | 570 | 2.4 | 0 | 0.6 | 17 | 770 | 245 | 240 | 248 | Example |
| 18 | I | 1100 | 25 | 25 | 100 | 0.3 | 670 | 25 | 100 | 580 | 1.5 | 0 | 0.5 | 16 | 750 | 254 | 260 | 255 | Example |
| 19 | J | 1100 | 6 | 60 | 100 | 0.8 | 670 | 60 | 100 | 580 | 1.9 | 0 | 0.6 | 16 | 740 | 122 | 123 | 125 | Example* |
| 20 | K | 950 | 50 | 10 | 100 | 0.1 | 680 | 10 | 100 | 580 | 1.4 | 0 | 0.6 | 16 | 740 | 230 | 235 | 238 | Example |
| 21 | L | 1150 | 25 | 25 | 100 | 0.2 | 690 | 25 | 100 | 570 | 22 | 0 | 0.8 | 15 | 770 | 220 | 227 | 220 | Example |
| 22 | M | 1100 | 6 | 60 | 100 | 0.1 | 720 | 60 | 100 | 580 | 1.6 | 0 | 0.5 | 16 | 810 | 130 | 130 | 125 | Example* |
| 23 | N | 1100 | 25 | 25 | 100 | 0.1 | 670 | 25 | 100 | 580 | 1.2 | 0 | 0.3 | 16 | 770 | 255 | 255 | 250 | Example |
| 24 | O | 1100 | 50 | 10 | 100 | 0.2 | 650 | 10 | 100 | 600 | 8.0 | 0 | 0.6 | 14 | 800 | 100 | 100 | 110 | Comparative Example |
| 25 | P | 1100 | 25 | 25 | 100 | 0.1 | 720 | 25 | 100 | 610 | 7.0 | 0 | 1.5 | 16 | 790 | 110 | 90 | 100 | Comparative Example |

(continued)

| No. | Steel sample ID | Production conditions | | | | | | | | | Evaluation results | | | | | | | | Remarks |
|---|---|---|---|---|---|---|---|---|---|---|---|---|---|---|---|---|---|---|---|
| | | Heating of steel material | Hot rolling | First accelerated cooling | | Dual phase heating | | Second accelerated cooling | | | Amount of retained γ at 1/4xt after deep cooling treatment (vol%) | Decrease ratio of retained γ at 1/4xt between before and after deep cooling treatment (vol%) | Average Mn concentration in γ (mass%) | Average Ni concentration in γ (mass%) | TS (MPa) | First time | Second time | Third time | |
| | | Heating temperature (°C) | Thickness (mm) | Average cooling rate at 550-300 °C at 1/4xt (°C/s) | Cooling stop temperature at 1/4xt (°C) | Average heating rate at 500°C or more at 1/4xt (°C/s) | Heating temperature (°C) | Average cooling rate at 1/4xt (°C/s) | Cooling stop temperature at 1/4xt (°C) | Tempering temperature (°C) | | | | | | $vE_{-196°C}$ (J) | $vE_{-196°C}$ (J) | $vE_{-196°C}$ (J) | |
| 26 | Q | 1100 | 50 | 10 | 100 | 0.1 | 700 | 10 | 100 | 570 | 7.0 | 14 | 3.0 | 15 | 730 | 245 | 180 | 220 | Comparative Example |
| 27 | R | 1100 | 25 | 25 | 100 | 0.2 | 730 | 25 | 100 | 600 | 1.5 | 0 | 0.5 | 14 | 750 | 140 | 130 | 140 | Comparative Example |
| 28 | S | 1100 | 25 | 25 | 100 | 0.1 | 680 | 25 | 100 | 570 | 1.7 | 0 | 0.6 | 17 | 760 | 130 | 130 | 120 | Comparative Example |
| 29 | T | 1100 | 25 | 25 | 100 | 0.2 | 750 | 25 | 100 | 640 | 0.0 | - | - | - | 680 | 5 | 6 | 6 | Comparative Example |
| 30 | U | 1100 | 25 | 25 | 100 | 0.2 | 670 | 25 | 100 | 600 | 1.5 | 0 | 0.5 | 15 | 750 | 150 | 140 | 150 | Comparative Example |

19

(continued)

| No. | Steel sample ID | Production conditions | | | | | | | | | | Evaluation results | | | | | | | | Remarks |
|---|---|---|---|---|---|---|---|---|---|---|---|---|---|---|---|---|---|---|---|---|
| | | Heating of steel material | Hot rolling | First accelerated cooling | | Dual phase heating | | Second accelerated cooling | | | | | | | | | vE-196°c (J) | | | |
| | | Heating temperature (°C) | Thickness (mm) | Average cooling rate at 550-300°C at 1/4xt (°C/s) | Cooling stop temperature at 1/4xt (°C) | Average heating rate at 500°C or more at 1/4xt (°C/s) | Heating temperature (°C) | Average cooling rate at 1/4xt (°C/s) | Cooling stop temperature at 1/4xt (°C) | Tempering temperature (°C) | Amount of retained γ at 1/4xt after deep cooling treatment (vol%) | Decrease ratio of retained γ at 1/4xt between before and after deep cooling treatment (vol%) | Average Mn concentration in γ (mass%) | Average Ni concentration in γ (mass%) | TS (MPa) | First time | Second time | Third time | |
| 31 | V | 1100 | 50 | 10 | 100 | 0.1 | 700 | 10 | 100 | 590 | 1.6 | 0 | 0.7 | 17 | 770 | 105 | 120 | 130 | Comparative Example |
| 32 | A | 1100 | 25 | 25 | 100 | 1.5 | 660 | 25 | 100 | 580 | 2.0 | 50 | 0.6 | 10 | 760 | 170 | 230 | 220 | Comparative Example |
| 33 | W | 1050 | 25 | 25 | 100 | 0.2 | 680 | 25 | 100 | 570 | 2.0 | 0 | 1.5 | 16 | 670 | 201 | 170 | 210 | Comparative Example |
| 34 | X | 1100 | 25 | 25 | 100 | 0.4 | 650 | 25 | 100 | 600 | 50 | 10 | 3.1 | 15 | 780 | 175 | 200 | 210 | Comparative Example |
| 35 | Y | 1100 | 25 | 25 | 100 | 0.2 | 700 | 25 | 100 | 580 | 2.1 | 0 | 0.5 | 14 | 810 | 100 | 120 | 100 | Comparative Example |

(continued)

| No. | Steel sample ID | Production conditions | | | | | | | | | | Evaluation results | | | | | | | | | Remarks |
|---|---|---|---|---|---|---|---|---|---|---|---|---|---|---|---|---|---|---|---|---|---|
| | | Heating of steel material | Hot rolling | First accelerated cooling | | Dual phase heating | | Second accelerated cooling | | | Amount of retained $\gamma$ at 1/4xt after deep cooling treatment (vol%) | Decrease ratio of retained $\gamma$ at 1/4xt between before and after deep cooling treatment (vol%) | Average Mn concentration in $\gamma$ (mass%) | Average Ni concentration in $\gamma$ (mass%) | TS (MPa) | First time | Second time | Third time | | | |
| | | Heating temperature (°C) | Thickness (mm) | Average cooling rate at 550-300 °C at 1/4xt (°C/s) | Cooling stop temperature at 1/4xt (°C) | Average heating rate at 500°C or more at 1/4xt (°C/s) | Heating temperature (°C) | Average cooling rate at 1/4xt (°C/s) | Cooling stop temperature at 1/4xt (°C) | Tempering temperature (°C) | | | | | | $vE_{-196°C}$ (J) | $vE_{-196°C}$ (J) | $vE_{-196°C}$ (J) | | | |
| 36 | Z | 1100 | 25 | 25 | 100 | 0.2 | 710 | 25 | 100 | 590 | 0.0 | - | - | - | 710 | 50 | 60 | 70 | Comparative Example |
| 37 | A | 1100 | 25 | 25 | 100 | 0.2 | 710 | 25 | 100 | 580 | 0.6 | 4 | 0.5 | 14 | 790 | 260 | 260 | 255 | Example |
| 38 | A | 1100 | 25 | 25 | 100 | 0.2 | 690 | 25 | 100 | 660 | 6.0 | 7 | 0.5 | 11 | 690 | 180 | 150 | 160 | Comparative Example |

\* Half-size Charpy impact test was conducted.
Underlines indicate outside the range according to the present disclosure.

21

As can be understood from Tables 1 and 2, each steel plate according to the present disclosure had high strength, and ensured excellent cryogenic toughness while favorably suppressing variation in toughness in the steel plate. This effect was achieved even in relatively thin steel plates of, for example, 6 mm to 25 mm in thickness. In each Comparative Example outside the range according to the present disclosure, the Charpy absorbed energy was lower than 200 J in at least one of the three measurements. In other words, in each Comparative Example, the cryogenic toughness varied in the steel plate and there were parts with low cryogenic toughness, failing to satisfy the foregoing target performance.

INDUSTRIAL APPLICABILITY

It is thus possible to enable steel plates of various thicknesses to have uniform and excellent cryogenic toughness while ensuring high strength.

**Claims**

1.  A steel plate comprising

    a chemical composition containing, in mass%,
    C: 0.01 % to 0.15 %,
    Si: 0.01 % to 0.50 %,
    Mn: 0.05 % to 0.60 %,
    Ni: 6.0 % to 7.5 %,
    Cr: 0.01 % to 1.00 %,
    Mo: 0.05 % to 0.50 %,
    P: 0.03 % or less,
    S: 0.005 % or less, and
    N: 0.0010 % to 0.0080 %,
    with a balance consisting of Fe and inevitable impurities,
    wherein at a depth position of 1/4 from a surface of the steel plate in a thickness direction, a decrease ratio of an amount of retained γ between before and after deep cooling treatment at -196 °C is less than 5 % in volume fraction and the amount of retained γ after the deep cooling treatment is 0.5 % or more in volume fraction.

2.  The steel plate according to claim 1, wherein the chemical composition further contains, in mass%, one or more selected from the group consisting of

    Al: 0.008 % to 0.10 %,
    Cu: 0.40 % or less,
    Nb: 0.05 % or less,
    V: 0.05 % or less,
    Ti: 0.03 % or less, and
    B: 0.0030 % or less.

3.  The steel plate according to claim 1 or 2, wherein the chemical composition further contains, in mass%, one or more selected from the group consisting of

    Ca: 0.007 % or less,
    REM: 0.010 % or less, and
    Mg: 0.070 % or less.

## INTERNATIONAL SEARCH REPORT

| International application No. |
| --- |
| **PCT/JP2021/040295** |

| A. | CLASSIFICATION OF SUBJECT MATTER |
| --- | --- |

*C22C 38/00*(2006.01)i; *C22C 38/44*(2006.01)i; *C22C 38/54*(2006.01)i; *C21D 8/02*(2006.01)n
FI:    C22C38/00 302B; C22C38/44; C22C38/54; C21D8/02 D

According to International Patent Classification (IPC) or to both national classification and IPC

| B. | FIELDS SEARCHED |
| --- | --- |

Minimum documentation searched (classification system followed by classification symbols)

C22C38/00-38/60; C21D8/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2014/017057 A1 (JFE STEEL CORPORATION) 30 January 2014 (2014-01-30) claims, paragraphs [0045]-[0057], table 1 | 1-3 |
| A | WO 2014/092129 A1 (KOBE STEEL, LIMITED) 19 June 2014 (2014-06-19) claims, paragraphs [0083]-[0105], tables 1A, 1B, 4A, 4B | 1-3 |
| A | JP 2014-34708 A (NIPPON STEEL & SUMITOMO METAL CORPORATION) 24 February 2014 (2014-02-24) claims | 1-3 |
| A | CN 110684928 A (SHANGHAI JIAO TONG UNIVERSITY) 14 January 2020 (2020-01-14) claims | 1-3 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 January 2022** | **25 January 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

| INTERNATIONAL SEARCH REPORT | | International application No. |
|---|---|---|
| Information on patent family members | | **PCT/JP2021/040295** |

| Patent document cited in search report | Publication date (day/month/year) | Patent family member(s) | Publication date (day/month/year) |
|---|---|---|---|
| WO 2014/017057 A1 | 30 January 2014 | EP 2876179 A1<br>claims, paragraphs [0045]-[005 7], table 1<br>US 2015/0147222 A1<br>CN 104487602 A<br>JP 2014-19936 A | |
| WO 2014/092129 A1 | 19 June 2014 | EP 2933347 A1<br>claims, paragraphs [0084]-[010 7], tables 1A, 1B, 4A, 4B<br>CN 104854252 A<br>JP 2014-118579 A<br>JP 2014-125678 A | |
| JP 2014-34708 A | 24 February 2014 | (Family: none) | |
| CN 110684928 A | 14 January 2020 | US 2021/0130941 A1<br>claims | |

**EP 4 234 740 A1**

**Patent documents cited in the description**

- JP 2011219848 A

- JP 2011214099 A